# EUROPEAN PATENT APPLICATION

(11) **EP 2 285 095 A1**
(43) Date of publication of application: **16.02.2011**
(21) Application number: 10007943.3
(22) Date of filing: 29.07.2010
(51) Int. Cl.: H04N 5/232, H04N 5/262, H04N 5/272

(54) **Image capturing device**

(30) Priority: 04.08.2009 JP 2009181333
(71) Applicant: OLYMPUS CORPORATION, Shibuya-ku Tokyo 151-0072 (JP)
(72) Inventor: Teramoto, Daisuke, Tokyo 151-0072 (JP)
(74) Representative: Gunzelmann, Rainer

(57) **Abstract**

An image capturing device capable of capturing a high-definition moving image comprises an image capturing unit that converts a subject image formed via an optical system with an adjustable focal length to image signals and outputs the image signals as image data, and an image processing unit that stores the output image data as still image data or moving image data into a storage unit. The image capturing device is **characterized in that** the image processing unit comprises an alignment processing unit that detects a position at which the field angle range of an image captured to be stored as moving image data fits within the field angle range of an image captured to be stored as still image data.

## Description

### TECHNICAL FIELD OF THE INVENTION

This invention relates to an image capturing device capable of capturing a high-definition moving image by combining a moving image and a still image.

### BACKGROUND OF THE INVENTION

Higher definition in moving images captured with moving image capturing-capable digital cameras (digital video cameras) is pursued with increasing dedication. The term "high-definition moving image" in this context refers to a high-resolution moving image captured at a high frame rate. However, higher resolution and a higher frame rate tend to be mutually exclusive goals and cannot easily be achieved together.

In addition, a moving image of a moving photographic subject cannot easily be captured with high definition at an intended field angle range (angular field of view) under normal circumstances. Tracking a moving subject with a lens at a telephoto setting requires a highly advanced image capturing technology. The resolution of a main photographic subject in a moving image captured over a wide range with a lens at a wide-angle setting is bound to be lower.

In the image synthesizing device disclosed in JP 2000-32337A in an attempt to address the issues discussed above, as a motion detecting circuit 2 detects a motion based upon image signals expressing an image photographed with a wide-angle camera block 1, a camera block 12 captures a photographic image of the range over which the motion has been detected. At this time, the range is photographed at a telephoto setting by dividing the range into a plurality of image portions. The plurality of image portions having been photographed are provided to a compression circuit 3 and are also provided to an image synthesizing circuit 9 via a switch circuit 8. In the compression circuit 3, the plurality of image portions each undergo DCT and the image portions having undergone the DCT are then recorded as compressed image signals into a recording medium 4. In the image synthesizing circuit 9, the plurality of image portions provided thereto are combined in real time and the synthesized image generated by combining the image portions is then brought up on display on a monitor via a switch circuit 7.

In the panoramic shooting-capable camera disclosed in JP 07-199321A, a viewfinder internal display unit 9 is set in an operating state as a panorama photographing setting is selected via a mode selecting switch unit 5, the attitude assumed by the camera as it captures frames of photographic images while the viewfinder internal display unit 9 is engaged in operation and the current attitude of the camera, input from an attitude detecting unit 11 such as a magnetic azimuth sensor or an angular speed sensor, to a CPU 10, are compared and arithmetic operation results are brought up on display at the display unit 9. Then, as a photographer, prompted by the arithmetic operation results on display at the display unit 9, presses a shutter release switch, a film feeding unit 8 is activated based upon the comparison results. As a roller at a film feed amount detecting unit 7 rotates, an identification mark imprinting unit 6 imprints marks onto film and the photographs are connected based upon the marks so as to create a panoramic photographic image.

### SUMMARY OF THE INVENTION

An image capturing device achieved in an embodiment of this invention, comprising an image capturing unit that converts a subject image formed via an optical system with an adjustable focal length to image signals and outputs the image signals as image data and an image processing unit that stores the output image data as still image data or moving image data into a storage unit, is **characterized in that** the image processing unit includes an alignment processing unit that detects a position within a field angle range of an image captured to be stored as the still image data, which matches a field angle range of an image captured to be stored as the moving image data.

The details as well as other features and advantages of this invention are set forth in the remainder of the specification and are shown in the accompanying drawings.

### BRIEF DESCRIPTION OF THE DRAWINGS

FIG. 1 is a functional block diagram of an image capturing device achieved in a first embodiment of this invention.

FIGS. 2A, 2B and 2C illustrate how a moving image is captured with an image capturing device in the related art.

FIGS. 3A and 3B illustrate how a moving image is captured with the image capturing device in the first embodiment of this invention.

FIG. 4 illustrates how a moving image is captured with the image capturing device achieved in the first embodiment of this invention.

FIG. 5 is a flowchart of image capturing processing executed in the image capturing device achieved in the first embodiment of this invention.

FIGS. 6A and 6B illustrate the image capturing processing executed in the first embodiment of this invention in a specific example.

FIGS. 7A and 7B illustrate the image capturing processing executed in the first embodiment of this invention in a specific example.

FIGS. 8A and 8B illustrate the image capturing processing executed in the first embodiment of this invention in a specific example.

FIG. 9 is a flowchart of image capturing processing executed in an image capturing device achieved in a second embodiment of this invention.

FIG. 10 illustrates the image capturing processing executed in the second embodiment of this invention in a specific example.

FIGS. 11A and 11B illustrate trimming processing executed in a third embodiment of this invention.

FIG. 12 illustrates trimming processing executed in a third embodiment of this invention.

FIG. 13 illustrates background image capturing and processing executed in a fifth embodiment of this invention.

### DESCRIPTION OF PREFERRED EMBODIMENTS

The following is a description of preferred embodiments of this invention.

### [First Embodiment]

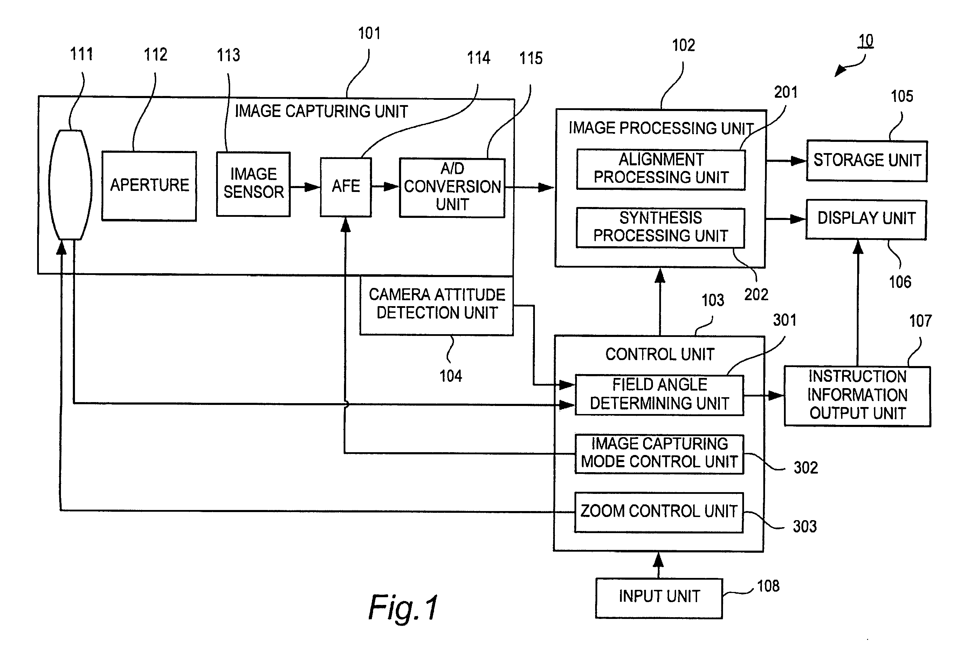

FIG. 1 is a functional block diagram of an image capturing device (digital camera) 10 achieved in the first embodiment of this invention.

The image capturing device 10 comprises an image capturing unit 101, an image processing unit 102, a control unit 103, a camera attitude detection unit 104, a storage unit 105, a display unit 106, an instruction information output unit 107 and an input unit 108.

The image capturing unit 101 captures a subject image to be output as image data, by forming the subject image and converting the subject image to electronic data through photoelectric conversion.

The image processing unit 102 stores the image data expressing the captured image into the storage unit 105 either as still image data or moving image data. It also brings up the image expressed with the image data on display at the display unit 106.

The control unit 103 controls the image capturing unit 101, the image processing unit 102, the instruction information output unit 107 and the like.

The camera attitude detection unit 104 detects a displacement of the camera caused by a user along an imaging direction. The camera attitude detection unit 104 may be constituted with, for instance, an acceleration sensor, a gyro sensor or a magnetic sensor.

The storage unit 105 stores image data expressing captured images, a program related to operations of the image capturing device 10 and the like. The storage unit 105 includes a storage medium constituted with a flash memory or a semiconductor memory such as a RAM, which is a permanent, built-in memory installed in the image capturing device 10, and an interface via which data are stored into the storage medium and data in the storage medium are read out.

The display unit 106 displays image data expressing a captured image or information related to operations of the image capturing device 10. The display unit 106 may be constituted with, for instance, a liquid crystal panel (LCD).

The instruction information output unit 107 outputs information that indicates to the user the field angle range of a still image corresponding to a moving image having been captured by the user or the range of a moving image corresponding to a still image having been captured by the user.

The input unit 108 is used as a user operation interface. The input unit 108 includes, for instance, a power button via which power on/off instructions for the image capturing device 10 are issued, a shutter release button via which an image capturing instruction for the image capturing device 10 is issued and a control button via which control instructions such as a mode switchover for the image capturing device 10 are issued. The input unit 108 may be constituted with a cross key, a touch panel or the like instead of buttons. In addition, the input unit 108 may be an interface via which voice instructions can be entered, such as a microphone.

The image capturing unit 101 includes an imaging lens (optical system) 111, an aperture mechanism 112, an image sensor 113, an analog front end (AFE) 114 and an analog/digital conversion unit (A/D conversion unit) 115.

Light departing a subject present in a specific visual field is condensed at the imaging lens 111 and an image is formed with the condensed light at the image sensor 113. The aperture mechanism 112 adjusts the quantity of light having been condensed at the imaging lens 111, which is allowed to enter. The imaging lens 111 is a zoom lens that allows the field angle range to be adjusted.

The image sensor 113 receives the light entering therein after passing through the aperture mechanism 112 and the light received at the image sensor 113 then undergoes photoelectric conversion to be converted to electrical signals. At the AFE 114, the electrical signals undergo various types of processing including sensitivity correction, white balance adjustment and read area selection. The A/D conversion unit 115 converts analog signals output from the AFE 114 to digital signals.

The image processing unit 102 includes an alignment processing unit 201 and a synthesis processing unit 202.

The alignment processing unit 201 determines the positions of a captured moving image and a captured still image, which are assumed on an image, through pattern matching or based upon information provided from the camera attitude detection unit 104. The synthesis processing unit 202 generates a synthetic image by combining a still image and a moving image, extracts images and the like.

The control unit 103 includes a field angle determining unit 301, an image capturing mode control unit 302 and a zoom control unit 303.

The field angle determining unit 301 calculates a field angle range needed to capture a background image that will contain the captured moving image in its entirety based upon information indicating displacement of the image capturing device 10 along the imaging direction, provided from the camera attitude detection unit 104, information indicating the focal length of the imaging lens 111 and the like, having been obtained during the moving image capturing operation.

The image capturing mode control unit 302 controls the image capturing mode assumed at the image capturing unit 101. The available image capturing modes include a moving image capturing mode and a still image capturing mode. In order to assure a predetermined frame rate, a resolution level lower than the resolution setting for the still image mode is assumed in the moving image capturing mode.

The zoom control unit 303 executes zoom by controlling the focal length of the imaging lens 111. Through the zooming operation, the field angle range of image data expressing a captured image is adjusted.

The operation of the image capturing device 10 achieved in the first embodiment of this invention, structured as described above, is now described.

It is highly desirable that the image capturing device 10 be capable of capturing high-definition moving images. While the term "high-definition moving image" in this context refers to a high-resolution moving image captured at a high frame rate, higher resolution and a higher frame rate tend to be mutually exclusive.

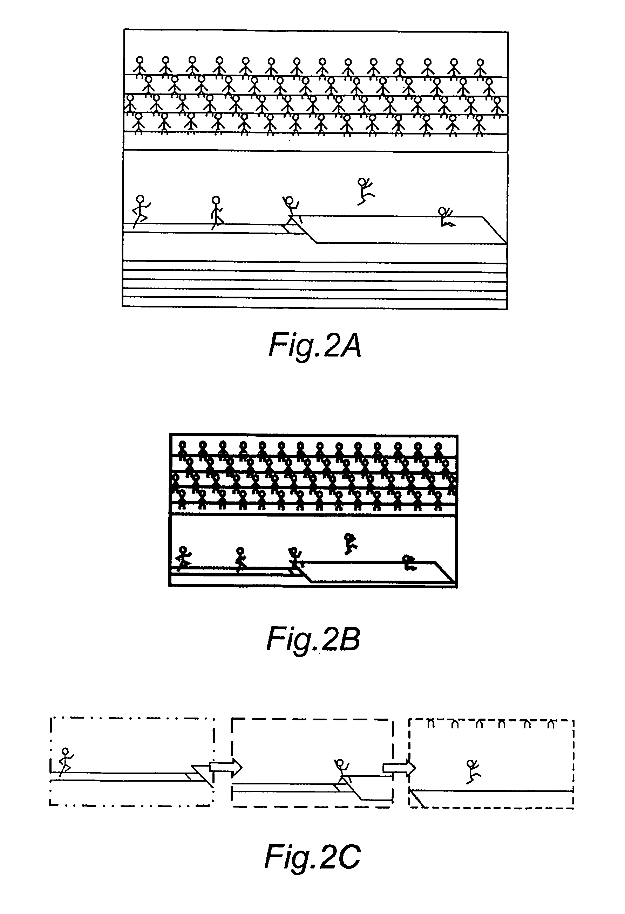

FIGS. 2A, 2B and 2C illustrate how a moving image may be captured with an image capturing device 10 in the related art.

FIG. 2A illustrates an example in which a main photographic subject moves substantially along the horizontal direction within a background with a relatively wide field angle range.

The following issues are bound to arise when capturing a moving image of such a subject.

Namely, a moving image containing a background with a wide field angle range is captured in the moving image mode by setting the imaging lens 100 on the wide angle-side so as to capture the overall image including the background. Since there is a limit to the level of resolution achieved in the moving image mode, the resolution over the area where the main photographic subject is present is bound to be low, as indicated in FIG. 2B. Therefore, the main subject cannot be captured with high definition.

While the main photographic subject alone may be captured in the moving image mode by panning with the main subject with the imaging lens 100 set to achieve a telephoto-side field angle range, such a panning operation can be successfully performed only by a highly skilled photographer. Therefore, the main subject may not be captured with clarity due to unsteady hand motion or a skewed pan, as illustrated in FIG. 2C. In addition, since the field angle range assumed at the telephoto setting is small, hardly any background will be captured.

In order to address the issues discussed above, high-definition image data are captured in the first embodiment of this invention by combining moving image data expressing a moving image captured by the user with a wide-angle background image.

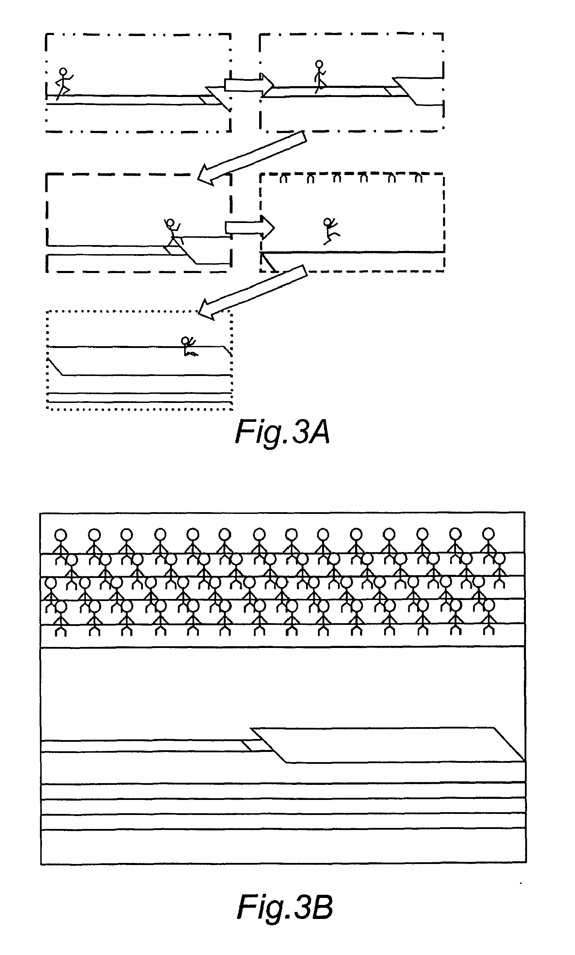

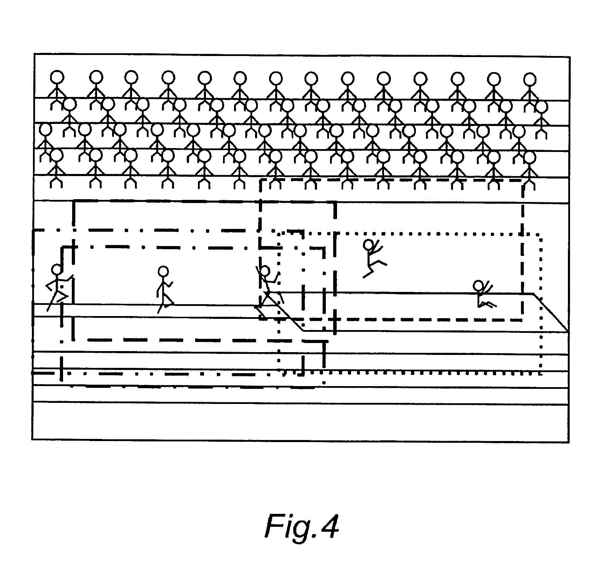

FIGS. 3A, 3B and 4 illustrate how a moving image may be captured with the image capturing device 10 achieved in the first embodiment of this invention.

As shown in FIG. 3A, the user first captures an image of the subject in the moving image mode at a telephoto-side field angle range. Any subject misalignment or unsteady hand motion that may occur at this time will not become an issue.

Once the image capturing operation executed in the dynamic mode is completed, the image capturing device 10 issues an instruction for the user indicating a field angle range corresponding to the captured moving image. In response to the instruction, the user captures a still image to be used as the background image, with a wide angle-side field angle range as has been indicated, as illustrated in FIG. 3B.

Once the background image has been captured, the image capturing device 10 combines the moving image data and the still image data by aligning the moving image data with the still image data, as shown in FIG. 4. As a result, a high-definition moving image is generated.

Next, the operations executed in the first embodiment of this invention will be described in more specific terms.

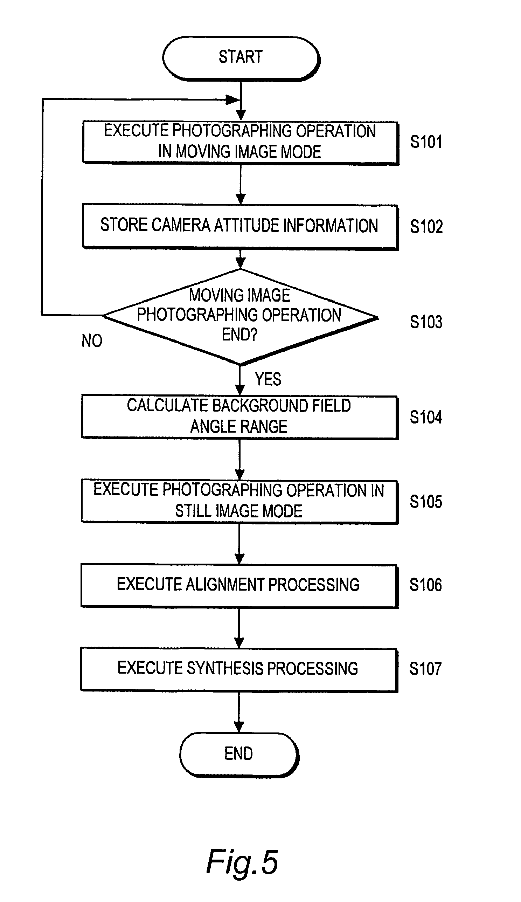

FIG. 5 is a flowchart of image capturing processing executed in the image capturing device 10 achieved in the first embodiment of this invention.

The user first selects the moving image mode as the image capturing mode by operating the input unit 108. In response, the image capturing mode control unit 302 sets the image capturing unit 101 in the moving image mode. In this state, the user operates the input unit 108 to capture an image of a subject (S101).

The subject may be, for instance, a moving subject. In such a case, the user starts capturing a moving image centered on the subject by setting the focal length of the imaging lens to achieve a specific field angle range on the telephoto side.

As described above, an optical image of the subject is converted to digital signals via the image sensor 113, the AFE 114 and the A/D conversion unit 115. Under control executed by the image processing unit 102, the digital signals are stored into the storage unit 105 as moving image data.

At this time, the camera attitude detection unit 104 obtains camera attitude data and stores the attitude data thus obtained into the storage unit 105 (S102).

The processing in the steps S101 and S102 described above is repeatedly executed until the user issues an instruction for ending the moving image capturing operation.

Once the user has issued an instruction for ending the moving image capturing operation, the field angle determining unit 301 calculates the optimal field angle range of a still image to be used as the background image (S104).

The field angle determining unit 301 calculates a field angle range that will contain the field angle range of all the frames constituting the moving image data having been captured in the step S101, based upon the camera attitude data provided via the camera attitude detection unit 104, the imaging lens focal length controlled by the zoom control unit 303 and the like.

Next, the instruction information output unit 107 brings up on display at the display unit 103 instruction information indicating the field angle range having been calculated by the field angle determining unit 301. The user views the instruction information on display, sets the field angle range accordingly and captures a still image to be used as the background image (S105). The captured still image is then stored into the storage unit 105.

Once the still image to be used as the background image has been captured, the alignment processing unit 201 determines the position of the moving image on the background image (S106). Based upon the determination results, the synthesis processing unit 202 combines the background image and the moving image and stores a new moving image created by stringing together the combined frames into the storage unit 105 (S107). The moving image is brought up on display at the display unit 106 in response to a user instruction.

Through the processing described above, the image capturing device 10 generates high-definition moving image data by incorporating moving image data at relatively low resolution into the high-resolution background image.

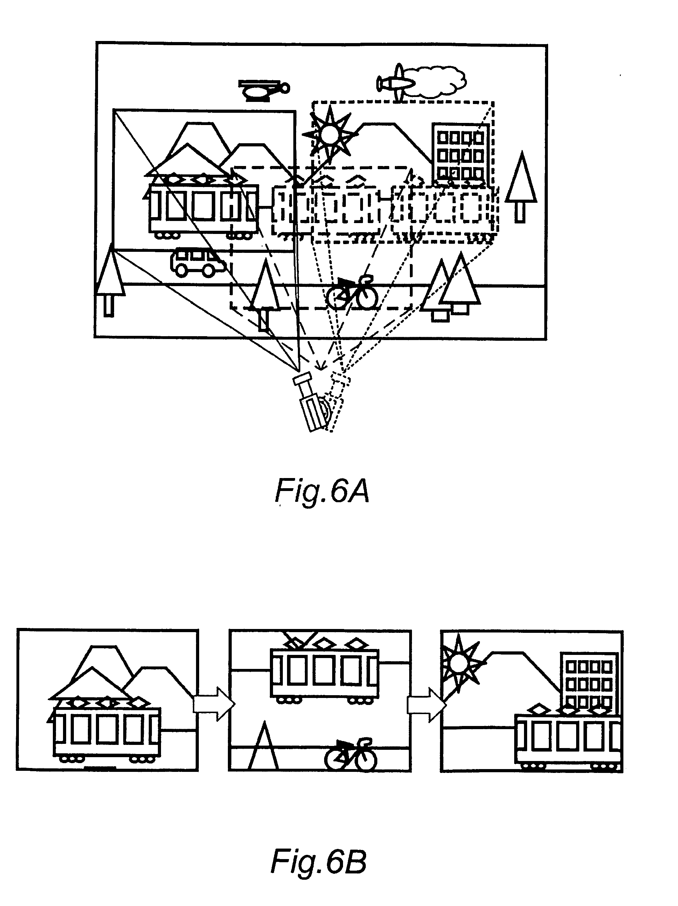

FIGS. 6A through 8 illustrate a specific example of the image capturing processing executed in the first embodiment of this invention.

FIG. 6A illustrates an image of a moving subject captured in the moving image mode while the user ensures that the subject is contained within an imaging field angle range. It is assumed that the moving image data captured in this example are made up with three frames (a first frame, a second from and a third frame) so as to allow the image processing to be described in simpler terms.

The user performs a panning operation by moving the image capturing device 10 so as to contain the moving subject within the imaging field angle range set for the moving image mode. The moving image data thus captured are stored into the storage unit 105 under control executed by the image processing unit 102.

As a result, the moving image made up with the first frame, the second frame and the third frame, as shown in FIG. 6B, are stored.

The user performing the panning operation does not need to hold the moving subject at a fixed position within the imaging field angle range, and any unsteady hand motion or skewing that may occur during the panning operation will not become an issue.

The camera attitude data obtained via the camera attitude detection unit 104 during the moving image mode image capturing operation, as has been described in reference to step S102 in FIG. 5, are stored into the storage unit 105.

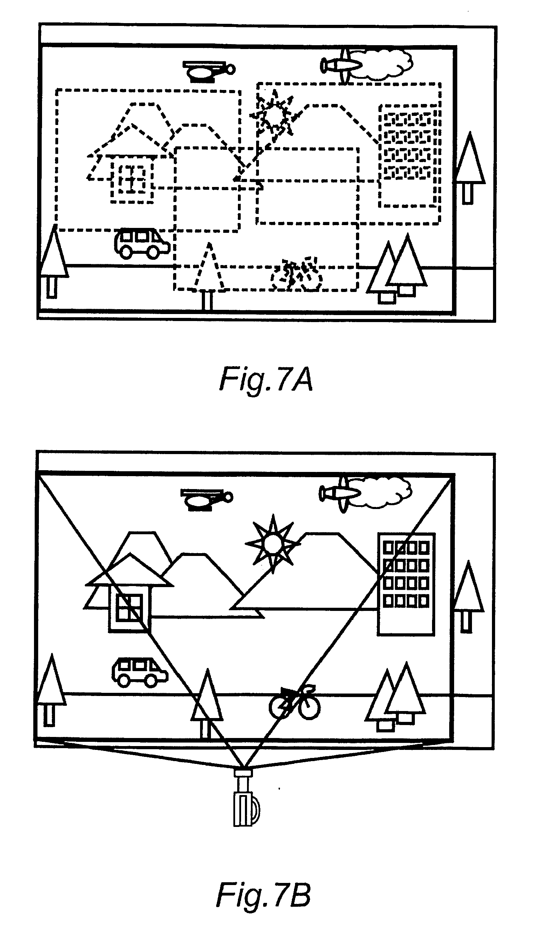

Once the moving image mode image capturing operation has ended, the image capturing device 10 calculates the optimal field angle range on the wide angle-side to be assumed when capturing the background image (indicated by the bold lines in FIG. 7A). The field angle range thus calculated is indicated at the display unit 106 via the instruction information output unit 107.

Based upon the information brought up on display at the display unit 106, the user sets a field angle range for the imaging lens 111 and captures a background image in the still image mode, as shown in FIG. 7B.

Once the background image capturing operation has ended, the alignment processing unit 201 in the image capturing device 10 aligns the captured moving image data with the captured background image. In more specific terms, the alignment processing unit 201 references the individual frames constituting the moving image data and the still image data and determines the frame positions to be assumed within the still image data based upon the imaging directions indicated in the individual sets of camera attitude data or through pattern matching.

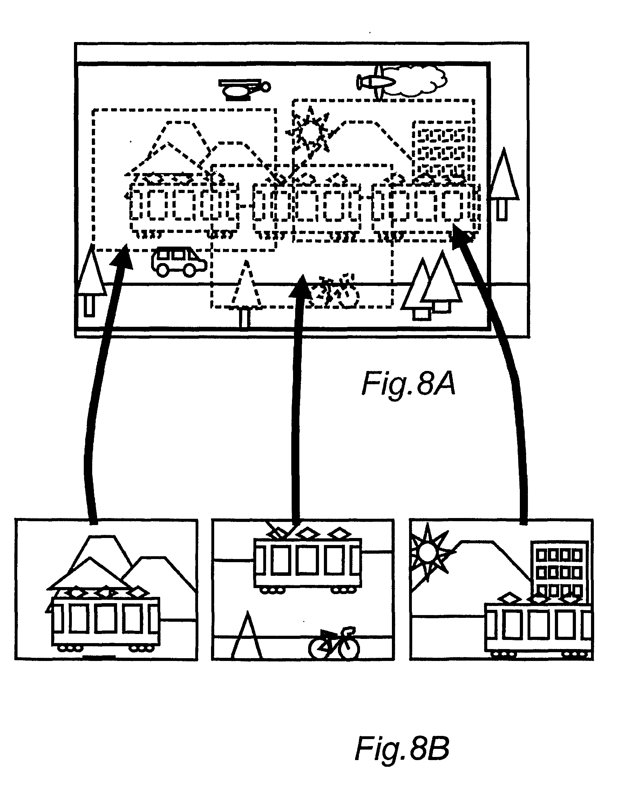

Based upon alignment processing results, the synthesis processing unit 202 combines the moving image data with the background image, as illustrated in FIGS. 8A and 8B. The moving image data thus synthesized are stored into the storage unit 105.

Through the processing described above, synthetic moving image data achieving a resolution matching the resolution of the high-resolution background image are generated.

Normally, a panning operation can be performed successfully only by a highly skilled photographer capable of panning the image capturing device 10 while holding a moving subject at substantially the center of the field of view.

However, the first embodiment of this invention does not require the photographer capturing a moving image with the image capturing device to hold a moving subject at a fixed position within the field of view and allows high quality synthetic moving image data to be generated regardless of any unsteady hand motion or skewing that may occur while capturing the moving image. Since the resolution of the synthesized moving image data matches the resolution of the background image captured in the still image mode, the user is able to capture a high-definition moving image.

### [Second Embodiment]

Next, the second embodiment of this invention is described.

While an image capturing operation is first executed in the moving image mode and then a background image corresponding to the moving image data having been obtained in the moving image mode is captured in the first embodiment described above, a background image is first captured and then moving image data are captured in the second embodiment.

The same reference numerals are assigned to components identical to those in the first embodiment to preclude the necessity for a repeated explanation thereof.

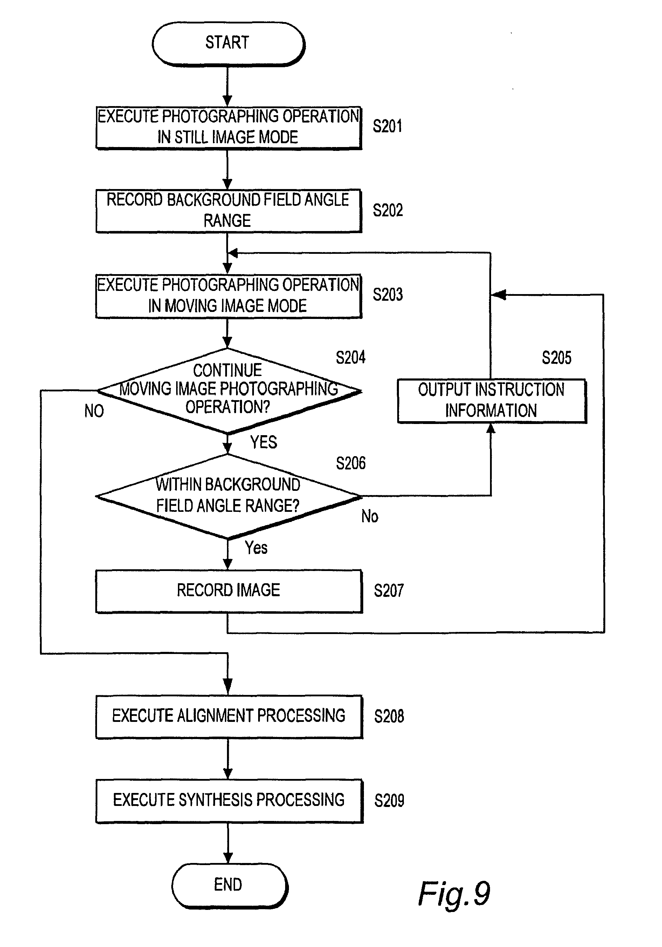

FIG. 9 is a flowchart of image capturing processing executed in the image capturing device 10 achieved in the second embodiment of this invention.

The user first selects the still image mode as the image capturing mode by operating the input unit 108. In response, the image capturing mode control unit 302 sets the image capturing unit 101 in the still image mode. In this state, the user captures a still image to be used as a background image (S201).

At this time, the user sets the focal length of the imaging lens to the wide angle-side by operating the input unit 108 so as to capture a still image assuming a desired field angle range.

As described above, an optical image of the background is converted to digital signals via the image sensor 113, the AFE 114 and the A/D conversion unit 115. Then the image processing unit 102 stores the digital signals into the storage unit 105.

Next, the field angle determining unit 301 obtains information indicating the imaging direction assumed by the image capturing device 10, which is provided by the camera attitude detection unit 104 and also obtains information indicating the field angle range assumed by the imaging lens 111, which is provided by the zoom control unit 303. Based upon the imaging direction and the field angle range assumed by the imaging lens 111, the field angle determining unit 301 determines the field angle range of the background image having been captured in step S201. The field angle range of the background image thus ascertained is stored into the storage unit 151 (S202).

The user then selects the moving image mode as the image capturing mode by operating the input unit 108 and starts capturing a moving image centered on the subject with the focal length of the imaging lens set on the telephoto side (S203).

The image capturing device 10 determines (S204) whether or not the user has issued an instruction for ending the moving image capturing operation. If an instruction for ending the image capturing operation has been issued, the operation shifts into a step S208. However, if an instruction for ending the image capturing operation has not been issued, the operation shifts into a step S206.

In the step S206, a determination is made as to whether or not the field angle range of the moving image currently being captured is within the range of the field angle range of the background image having been obtained in the step S202.

More specifically, the field angle determining unit 301 obtained information indicating the imaging direction assumed by the image capturing device 10, which is provided by the camera attitude detection unit 104, and also obtains information indicating the field angle range assumed by the imaging lens 111, which is provided by the zoom control unit 303. Based upon the imaging direction and the field angle range assumed by the imaging lens 111, the field angle determining unit 301 determines whether or not the field angle range of the moving image currently being captured is within the range of the field angle range of the background image having been obtained in step S202.

If the field angle range of the moving image is determined to be beyond the range of the field angle range of the background image, the operation shifts into a step S205 in which the field angle determining unit 301 reports the determination results to the instruction information output unit 107. In response, the instruction information output unit 107 brings up on display at the display unit 106 information for the user indicating that the moving image currently being captured is not within the range of the background image. The operation then returns to the step S203.

The information may be provided for the user at this time by, for instance, bringing up on display at the display unit 106 the background image having already been captured and stored in the storage unit 105 with the field angle range of the moving image data being captured currently indicated with frame lines within the background image. If the frame lines are outside the background image, the user is able to ascertain that the moving image data being currently captured are not contained within the field angle range of the background image.

If the moving image data are determined to be contained within the field angle range of the background image, the operation shifts into a step S207 in which the image processing unit 102 stores the captured moving image data into the storage unit 105.

In the step S208, the alignment processing unit 201 determines the position to be assumed by the moving image on the background image. The synthesis processing unit 202 combines the background image and the moving image based upon the determination results. The synthesized image data thus generated are stored into the storage unit 105 as new moving image data in a step S209. The new moving image data can be brought up on display at the display unit 106 in response to a user instruction.

Through the processing described above, the image capturing device 10 is able to create high-definition moving image data by incorporating moving image data at relatively low resolution into a high-resolution background image.

Next, the image capturing processing executed in the second embodiment is described in reference to a specific example.

First, in the step S201 in FIG. 9, the user captures a background image (an image identical to that shown in FIG. 7B). The user captures a moving image (see FIGS. 6A and 6B) in the steps S203 through S207.

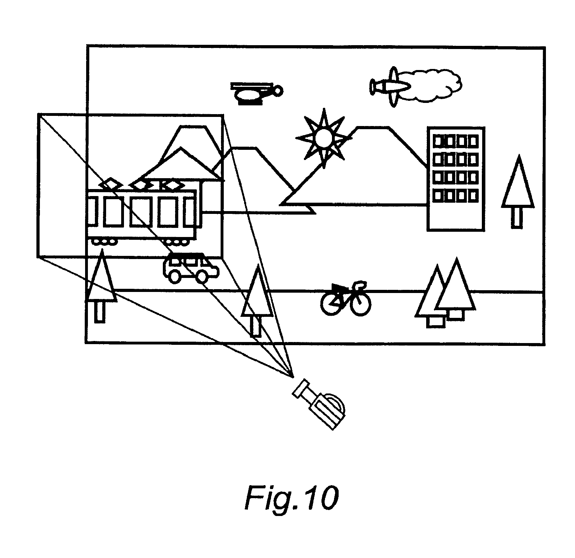

While the moving image is being captured, a determination is made in the step S206 as to whether or not the field angle range of the moving image is contained within the field angle range of the background image. If the field angle determining unit 301 determines that the moving image data are not contained within the field angle range of the background image (see FIG. 10) the instruction information output unit 107 outputs to the display unit 106 information indicating that the moving image currently being captured is not contained within the range of the background image.

The information indicating that the moving image currently being captured is not contained within the range of the background image, output by the instruction information output unit 107, may be a warning brought up on display at the display unit, a frame superimposed on the image on display or the overall image composition indicated as a thumbnail image.

The user, upon being notified that the moving image currently being captured is not contained within the range of the background image, will promptly end the moving image capturing operation.

After the moving image capturing operation ends, the alignment processing unit 201 in the image capturing device 10 aligns the moving image data having been captured and the background image data. The synthesis processing unit 202 combines the moving image data with the background image, as illustrated in FIGS. 8A and 8B, based upon the alignment processing results. The synthesized moving image data are then stored into the storage unit 105.

Through the processing described above, synthetic moving image data achieving a resolution matching the resolution of the high-resolution background image are generated.

Through the second embodiment of this invention, in which still image data to constitute a background image are first captured and then moving image data are captured, high-definition moving images can be captured even by untrained users without advanced photographic skills, as in the first embodiment described earlier.

### [Third Embodiment]

The third embodiment of this invention is now described.

The third embodiment is distinguishable from the first and second embodiments described above in that additional processing, i.e., trimming processing, is executed for moving image data to be output. The same reference numerals are assigned to components identical to those in the first and second embodiments to preclude the necessity for a repeated explanation thereof.

In the step S107 in FIG. 5 related to the first embodiment, synthesized moving image data are generated. Likewise, in the step S209 in FIG. 9 related to the second embodiment, synthesized moving image data are generated. The synthesized moving image data achieve a resolution matching the resolution of the background image.

Following the synthesis processing, extraction processing is executed in the third embodiment in order to extract an image area having a specific field angle range, centered on a main photographic subject.

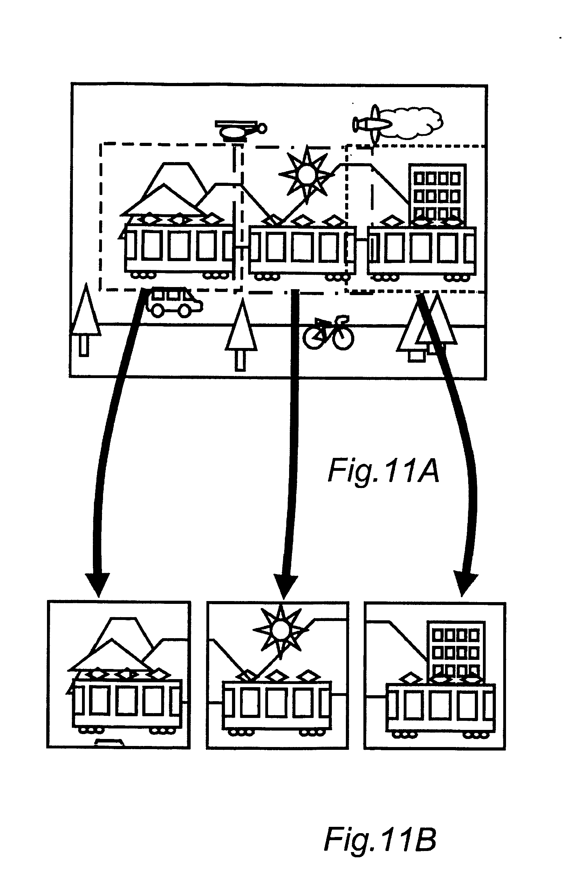

FIGS. 11A and 11B illustrate the trimming processing executed in the third embodiment of this invention.

The synthesis processing unit 202 sets a specific field angle range around the main photographic subject. Then, an image area assuming the specific field angle range around the main subject is extracted from each of the frames constituting the moving image data. New moving image data are then generated by stringing together the frames having been extracted. The new moving image data are stored into the storage unit 105.

Even if the hand of the user capturing the moving image data shakes or skews during the moving image capturing operation, synthesized moving image data centered on the main photographic subject can be generated through the trimming processing executed in the third embodiment. Consequently, a high-quality moving image, unaffected by any unsteady hand motion or skewing, can be obtained through panning.

The synthesis processing unit 202 may automatically select a main photographic subject or set a specific field angle range, or the settings may be freely selected in response to user instructions.

### [Fourth Embodiment]

The fourth embodiment of this invention is now described.

In the fourth embodiment, the trimming processing having been described in reference to the third embodiment is modified so as to generate a moving image that will provide a more immediate sense of presence. The same reference numerals are assigned to components identical to those in the first through third embodiments to preclude the necessity for a repeated explanation thereof.

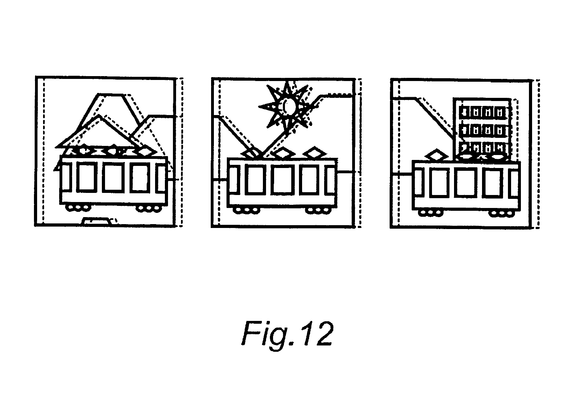

FIG. 12 illustrates the trimming processing executed in the fourth embodiment of this invention.

As in the extraction processing executed in the third embodiment described earlier, the synthesis processing unit 202 extracts image portions assuming a specific field angle range centered on the main photographic subject and generates new moving image data by stringing together the frames having been extracted.

As part of the processing, the synthesis processing unit 202 processes the background image in coordination with motions of the subject. More specifically, the synthesis processing unit 202 calculates the rate at which the background moves past by ascertaining the speed at which the image capturing device 10, capturing an image of a moving subject, moves based upon the information provided by the camera attitude detection unit 104. Then, based upon the rate at which the background moves past, having been thus calculated, the background image is processed. In other words, image processing is executed so as to render the background image to take on the appearance of moving based upon the background passing rate.

Once image processing on the background image has been completed, the individual frames are combined to generate synthesized moving image data. One of the frames constituting the moving image data may also be stored as still image data.

Through the fourth embodiment, moving image data or still image data expressing a more immediate sense of presence can be generated.

### [Fifth Embodiment]

The fifth embodiment of this invention is now described.

The fifth embodiment is distinguishable from the first embodiment described above in the image processing executed to capture the background image. The same reference numerals are assigned to components identical to those in the first through fourth embodiments to preclude the necessity for a repeated explanation thereof.

The field angle determining unit 301 calculates the field angle range of the still image to be used as the background image in the step S 104 in FIG. 5, in reference to which the first embodiment has been described. At this time, if the calculated field angle range is determined to be greater than the maximum field angle range that can be captured with the imaging lens 111, the field angle determining unit 301 issues an instruction to capture the background image by dividing the background image into smaller images.

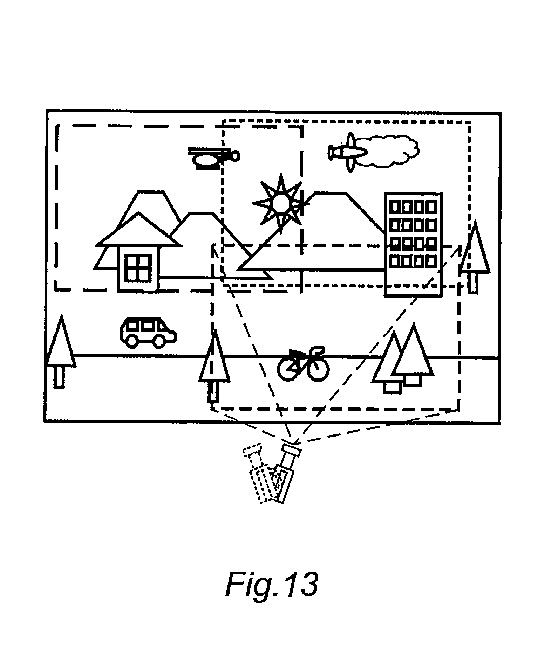

FIG. 13 illustrates the background image capturing processing executed in the fifth embodiment of this invention.

If the field angle range of the still image is determined to be greater than the maximum field angle range that can be captured by the imaging lens 111 in the step S104 in FIG. 5 in reference to which the first embodiment has been described earlier, the field angle determining unit 301 outputs an instruction for capturing the background image by capturing a plurality of small images based upon the camera attitude data provided by the camera attitude station unit 104, the focal length of the imaging lens controlled by the zoom control unit 303 and the like.

In response to the instruction, the instruction information output unit 107 brings up on display at the display unit 106 an instruction for the user to capture a plurality of still images along a plurality of imaging directions.

The user sets a specific field angle range by referencing the instruction information and captures a plurality of still images to be used as a background image. The still images thus captured are stored into the storage unit 105.

The plurality of still images stored in the storage unit 105 are combined into a single integrated background image by the synthesis processing unit 202 and the newly created background image is stored into the storage unit 105.

The fifth embodiment allows a field angle range in a range beyond the wide angle-side field angle of the imaging lens 111 to be set for the background image.

Through any of the embodiments of this invention described above, high-definition moving image data can be generated by combining a still image and a moving image. By extracting image portions centered on the main photographic subject, any factors that would otherwise lead to a failed image capturing operation, such as unsteady hand motion or skewing, can be eliminated.

The camera attitude detection unit 104 should be constituted with a sensor capable of obtaining position information through measurement, such as an acceleration sensor, a gyro sensor, a magnetic sensor or a GPS (global positioning system) unit.

As an alternative, the camera attitude may be detected strictly through image pattern matching without using a sensor capable of obtaining position information through measurement.

The instruction information output by the instruction information output unit 107 does not necessarily need to be displayed at the display unit 106 and may instead be provided in the form of sound or vibration, by turning on or blinking an indicator lamp, or the like.

While a new synthesized moving image created by combining a still image and a moving image is stored in the embodiments of this invention, it is not strictly necessary to store the newly created moving image and instead, the initial image data (the still images and the moving image) alone may be stored and the synthesis processing or extraction processing may be executed when reproducing the image data. Such an alternative will be advantageous in that the volume of image data to be stored can be reduced.

After obtaining a moving image by capturing a moving photographic subject, the image areas directly around the moving photographic subject alone may be extracted based upon the differences between the individual frames and moving image data that do not include any background may be stored. Through these measures, the volume of moving image data to be stored can be reduced and, at the same time, a higher level of freedom is afforded in alignment during the image synthesis processing.

Instead of using a single still image as the background image in correspondence to a given set of moving image data, a plurality of background images may be captured by the user and synthesized image data may be generated by switching from one background image to another.

For instance, synthesized moving image data may be generated by switching background images over predetermined intervals within the range of the moving image. As an alternative, background images captured over intervals the length of which is adjusted in correspondence to audio data (specific voice/sound conditions) obtained via the input unit 108 may be switched from one background image to another as appropriate.

For instance, synthesis processing may be executed so as to switch to a corresponding background image for a scene in which a loud roar from an audience is heard, and in this case, moving image data providing a sense of more immediate presence will be generated.

A smaller field angle range compared to that of the corresponding still image data, should be assumed for moving image data captured by the image capturing device 10. In other words, the number of pixels constituting the moving image data should be smaller than the number of pixels constituting the still image data.

More specifically, optimal settings should be selected for the field angle range assumed for the imaging lens 111 in the image capturing unit 101 and the number of pixels constituting the image data output from the A/D conversion unit 115 to undergo the conversion processing at the image processing unit, so as to ensure that the field angle ranges and the resolution levels of the moving image data and the still image data can remain unaltered, i.e., that the moving image data and the still image data can be combined without having to change the numbers of pixels or the field angle ranges.

Through these measures, the synthesis processing executed when combining the moving image data and the still image data can be simplified, which, in turn, contributes toward reducing the processing load on the image capturing device 10.

This invention is not limited to the embodiment described above, and naturally includes various modifications and improvements within the scope of the technical spirit thereof.

This application claims priority from Japanese Patent Application No. 2009-181333 filed August 4, 2009, which is incorporated herein by reference.

## Claims

1. An image capturing device, comprising:
an image capturing unit(101) that converts a subject image, formed via an optical system that allows focal length adjustment, to image signals and outputs the image signals as image data;
an image processing unit(102) that stores the image data having been output into a storage unit(105) as still image data or moving image data; and
a display unit(106) at which the still image data or the moving image data, currently being captured by the image capturing device or stored in the storage unit(105), are brought up on display, wherein:
the image processing unit(102) comprises an alignment processing unit(201) that detects a position at which a field angle range of an image captured as the moving image data fits within a field angle range of an image captured as the still image data.

2. The image capturing device as defined in claim 1, further comprising:
a field angle determining unit(301) that calculates a field angle range that contains all frames constituting the moving image data having been stored; and
an instruction information output unit(107) that outputs to the display unit(106) information related to the field angle range having been calculated by the field angle determining unit(301), wherein:
the field angle determining unit(301) determines whether or not field angle ranges of frames constituting the moving image currently being captured are contained within a field angle range of the still image data having been stored; and
in case the field angle ranges of the frames constituting the moving image data currently being captured are determined to be not contained within the field angle range of the stored still image data, the instruction information output unit(107) outputs information indicating determination results to the display unit(106).

3. The image capturing device as defined in claim 1, further comprising:
a field angle determining unit(301) that calculates a field angle range that contains all frames constituting the moving image data having been stored; and
an instruction information output unit(107) that outputs to the display unit(106) information related to the field angle range having been calculated by the field angle determining unit(301), wherein:
the instruction information output unit(107) indicates a field angle range that contains all the frames constituting the moving image data having been stored in the storage unit(105) within the still image data being captured and on display at the display unit(106).

4. The image capturing device as defined in claim 2, wherein:
the instruction information output unit(107) indicates at the display unit(106) whether or not the field angle ranges of all frames constituting the moving image data being captured fit within the field angle range of the still image data having been stored in the storage unit(105).

5. The image capturing device as defined in claim 3, wherein:
the instruction information output unit(107) indicates at the display unit(106) whether or not the field angle ranges of all frames constituting the moving image data having been stored in the storage unit(105) are contained within the field angle range of the still image data being captured.

6. The image capturing device as defined in claim 1, wherein:
the image processing unit(102) comprises an image synthesis unit(202) that generates new synthesized moving image data by combining the still image data having been stored with individual frames constituting the moving image data having been stored.

7. The image capturing device as defined in claim 6, wherein:
a plurality of sets of still image data are stored into the storage unit(105); and
the image synthesis unit(202) selects a set of still image data among the plurality of sets of still image data having been stored.

8. The image capturing device as defined in claim 6, further comprising:
an audio pickup unit that picks up sound, wherein:
the image synthesis unit(202) selects a set of still image data among the plurality of sets of still images having been stored, based upon a volume of sound picked up by the audio pickup unit.

9. The image capturing device as defined in claims 2 and 3, further comprising:
a camera attitude detection unit(104) that detects an attitude and a position of the image capturing device, wherein:
the field angle determining unit(301) calculates a field angle range based upon information provided via the camera attitude detection unit(104).
